# DEMANDE DE BREVET EUROPEEN

(11) **EP 1 074 194 A1**
(43) Date de publication de la demande: **07.02.2001**
(21) Numéro de dépôt: 00114500.2
(22) Date de dépôt: 06.07.2000
(51) Int. Cl.: A43B 13/14, A43B 13/12, A43B 5/16, A43B 5/04, B32B 3/10, A63B 71/14, A63C 9/08

(54) **Structure souple - rigide**

(30) Priorité: 03.08.1999 FR 9910219
(71) Demandeur: Salomon S.A., 74370 Metz-Tessy (FR)
(72) Inventeur: Barthelemy, Antoine, 74940 Annecy-Le-Vieux (FR)

(57) **Abrégé**

Structure composite comprenant au moins une surface, ladite structure autorisant la flexion selon un côté de ladite surface et interdisant la flexion selon le côté opposé ou contre-flexion; ladite structure comprenant; une première couche (1) flexible mais sensiblement non extensible; et une deuxième couche (2) fixée sur la première comprenant une pluralité d'éléments (20) juxtaposés résistants au moins à des efforts de compression exercés suivant une direction sensiblement parallèle à la dite structure.

De préférence, ladite structure composite comprend des moyens d'énergisation, qui augmentent la force de rappel en position neutre, ceux-ci pouvant être constitués par une troisième couche (3) faite d'un matériau élastique.

## Description

La présente invention concerne une structure composite essentiellement bidimensionnelle autorisant la flexion et interdisant la contre-flexion.

Le document DE 35 16 545 décrit un gant pour gardien de but de football dans lequel une structure souple/rigide est utilisée. Cette structure est composée de deux couches, une couche intérieure qui est flexible et d'une deuxième couche composée d'une pluralité d'éléments fixés sur la première couche. L'objectif recherché par une telle construction est de protéger les doigts du gardien de but lorsqu'il réceptionne le ballon et de transmettre les efforts générés lors de la réception du ballon des doigts jusque dans le poignet. Cette construction est spécialement adaptée pour un gant. Ainsi, pour laisser au joueur une grande liberté de positionnement de ses doigts (plus ou moins fléchis) la première couche peut fléchir mais ne doit pas exercer une très grande force de rappel, laquelle force de rappel tendrait inévitablement à ramener les doigts en position hyper-étendue. Le port des gants serait dans ce cas très inconfortable. Il est donc important que cette structure ne présente qu'une faible élasticité.

Une telle structure ne peut être utilisée dans la construction d'une semelle de chaussure de sport. En effet, il est préférable pour un article de sport d'avoir une semelle qui revient à sa position initiale après déformation.

Le document FR 2 527 428 décrit une structure de ce type spécialement adaptée pour une semelle de chaussure de football. Elle est composée de parties en matière de grande dureté directement adjacentes entre elles, qui sont fixées sous une couche de matière molle. La flexibilité est assurée grâce à la flexion de la matière molle. La contre-flexion, c'est-à-dire la flexion vers le bas, est restreinte dès que les parties rigides entrent en contact les unes avec les autres. Cependant si l'effort de contre-flexion dépasse une certaine valeur la matière molle s'allongera et la semelle fléchira vers le bas. Une telle structure ne résout donc que partiellement le problème d'interdire la contre-flexion.

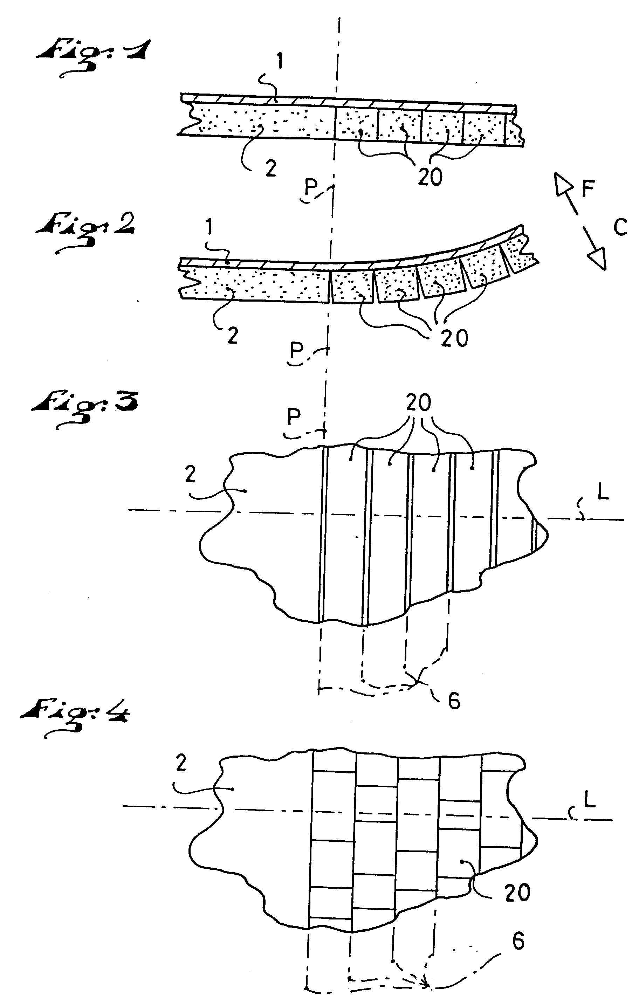

Le document FR 889 147 décrit une semelle de chaussure composée d'une planche en contre-plaqué sous laquelle sont fixés des éléments profilés rigides constitués d'une seule pièce de bois naturel. Les différentes sections de profilés envisagés aux figures 1, 4, 9 et 10 sont choisies pour éviter le blocage de petits cailloux dans les intervalles et la résistance à une compression exercée suivant l'axe longitudinal de la semelle sur l'ensemble de ces éléments s'en trouve de ce fait amoindrie. La résistance à la contre-flexion n'est nullement envisagée dans ce document, mais on peut déduire de ce qui précède quelle sera faible.

Le but de la présente invention est de remédier aux inconvénients des structures existantes, en particulier de construire une structure élastique perfectionnée qui à partir d'une position stable autorise la flexion dans une première direction ou selon un premier côté et interdit la contre-flexion, c'est-à-dire la flexion dans la direction opposée, que l'on nommera ici deuxième direction ou deuxième côté.

Ce but est atteint dans la structure composite revendiquée à la revendication 1 . II s'agit d'une structure composite comprenant au moins une surface autorisant la flexion selon un premier côté et interdisant la flexion de l'autre côté, ou deuxième côté (contre-flexion), ladite structure comprenant une première couche faite d'un matériau flexible mais sensiblement non extensible et une deuxième couche, fixée sous celle-ci et qui comprend une pluralité d'éléments juxtaposés résistants au moins à des efforts de compression exercés suivant une direction sensiblement parallèle à ladite structure. Du fait de cette construction, la structure pourra librement fléchir du côté de la première couche car les éléments de la deuxième couche se sépareront les uns des autres. En revanche la flexion du côté de la deuxième couche, c'est-à-dire la contre-flexion, sera impossible dès que les éléments de la deuxième couche entreront en contact. En effet, l'inextensibilité de la première couche combinée à l'incompressibilité des éléments formant la deuxième couche rigidifie complètement la structure en contre-flexion.

Dans un mode de réalisation préférentiel, la structure comprend des moyens d'énergisation augmentant la force de rappel en position neutre. Ces moyens d'énergisation peuvent prendre plusieurs formes. Une de ces formes consiste à mettre en précontrainte en flexion selon la première direction la première couche. Ainsi, en position neutre ou de repos, la structure est énergisée, c'est-à-dire en l'occurrence sollicitée en flexion selon la première direction. Une autre forme consiste à fixer sur la deuxième couche une troisième couche faite d'un matériau très élastique.

De préférence, la première couche est fine et constituée d'un matériau à haut module d'élasticité. Il peut s'agir d'une lame métallique ou d'un matériau composite haute performance, comme par exemple un tissu de verre, imprégné ou non de résine. C'est la finesse de cette couche qui autorisera la flexion de la structure.

En revanche, la deuxième couche est de préférence plus épaisse car la résistance à la contre-flexion de la structure est déterminée par la résistance à la compression de cette couche, laquelle est approximativement proportionnelle au cube de son épaisseur. Afin de ne pas alourdir la structure, on préférera des matériaux légers comme le bois ou une mousse rigide qui résiste très bien à la compression.

On le comprend aisément, une telle structure peut être utilisée dans de nombreuses applications. Certaines de ces applications se trouvent dans les matériels sportifs comme les chaussures, les dispositifs de protections corporelles ou les dispositifs de fixation d'une chaussure sur un engin de glisse.

La présente invention concerne également les caractéristiques qui ressortiront de la description qui va suivre en référence au dessin annexé, montrant à titre d'exemple quelques modes de réalisation, et dans lequel:
- la figure 1 est une vue en coupe longitudinale d'une portion de structure composite selon un premier mode de réalisation de l'invention,
- la figure 2 est une vue similaire à la figure 1 montrant la même structure en position fléchie,
- la figure 3 est vue de dessous de la même structure en position fléchie,
- la figure 4 est une vue de dessus d'une variante du premier mode de réalisation de l'invention,
- la figure 5 est une vue en perspective d'une structure selon un deuxième mode de réalisation de l'invention de l'invention,
- les figures 6 à 8 sont des vues similaires à la figure 5 montrant le fonctionnement de la structure selon le deuxième mode de réalisation de l'invention,
- les figures 9 et 10 sont des vues en coupe longitudinale d'un troisième et quatrième mode de réalisation de l'invention,
- les figures 11 et 12 sont des vues en coupe longitudinale illustrant une première forme d'énergisation d'une structure selon l'invention,
- la figure 13 est vue en coupe longitudinale illustrant une deuxième forme d'énergisation d'une structure selon l'invention,
- la figure 14 est une vue en perspective avec arraché partiel d'une semelle utilisant une structure composite selon l'invention,
- les figures 15-18 illustrent des exemples d'utilisation d'une structure composite selon l'invention au sein d'une semelle de chaussure,
- la figure 19 montre une protection de poignet utilisant la structure de l'invention,
- la figure 20 est une vue en perspective arrière d'une chaussure de ski utilisant la structure de l'invention,
- la figure 21 est une vue en perspective arrière d'une fixation de snowboard utilisant la structure selon l'invention,
- la figure 22 est une vue partielle en coupe longitudinale d'une structure selon un autre mode de réalisation de l'invention,
- la figure 23 est une vue de dessous d'une structure selon l'invention dont les lignes de flexion sont de profil variés,
- la figure 24 est une vue en coupe longitudinale d'une structure selon l'invention dont les cales présentent des section variées,
- la figure 25 est une vue en perspective arrière d'un patin à roulette la structure selon l'invention.

Les figures 1 et 2 représentent une coupe longitudinale de la structure selon un premier mode de réalisation de l'invention. La première couche 1 est une lame flexible d'épaisseur faible et ayant un haut module d'élasticité, donc sensiblement non extensible. On choisira un matériau dont le module d'élasticité est compris de préférence entre 10.000 et 100.000 MPa (Megapascal). Ce peut être une lame métallique ou bien un tissu hautes performances. La deuxième couche 2 se compose de blocs allongés 20, sensiblement incompressibles, disposés transversalement par rapport à la direction longitudinale de la structure et qui sont juxtaposés et collés sous la première couche 1. Les plans de contact P entre les différents blocs allongés 20 sont parallèles entre eux et perpendiculaires à la structure. Ces plans définissent des lignes de flexion 6 (cf. fig. 3) s'étendant transversalement à la direction longitudinale de la structure.

La figure 2 montre la même structure en position fléchie. La première couche 1 subit une flexion selon une première direction F, tandis que les blocs 20 s'écartent les uns des autres. Il est à noter que la figure 1, quant à elle, montre la structure à la fois dans sa position neutre, c'est-à-dire soumise à aucun effort extérieur, et dans une position soumise à un effort de contre-flexion. Dans ce dernier cas, la flexion de la lame 1 dans la direction de contre-flexion C, opposée à la direction de flexion F, est bloquée dès que les blocs 20 entrent en contact les uns avec les autres. On obtient alors une structure très rigide. Cette rigidité est autorisée par l'inextensibilité de la première couche 1 combinée à la incompressibilité des blocs allongés 20.

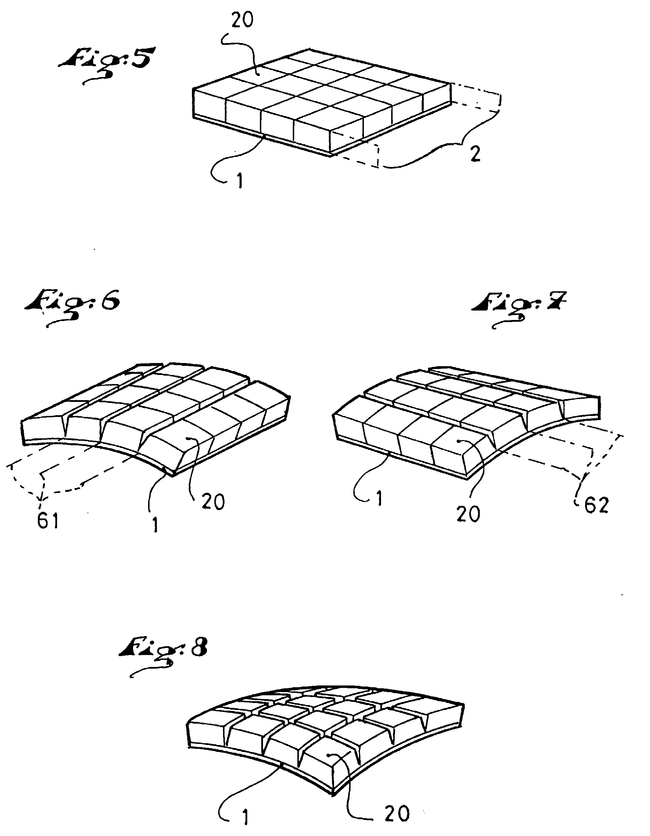

La pluralité d'éléments de la deuxième couche n'est pas nécessairement constituée de blocs 20 de forme allongée. La figure 4 montre une vue de dessous partielle d'une variation du premier mode réalisation de l'invention dans laquelle les éléments sont des blocs sensiblement cubiques ou parallélépipèdiques 20 disposés de façon à définir des lignes de flexion 6 parallèles entre elles et sensiblement transversales à une direction longitudinale L de la structure.

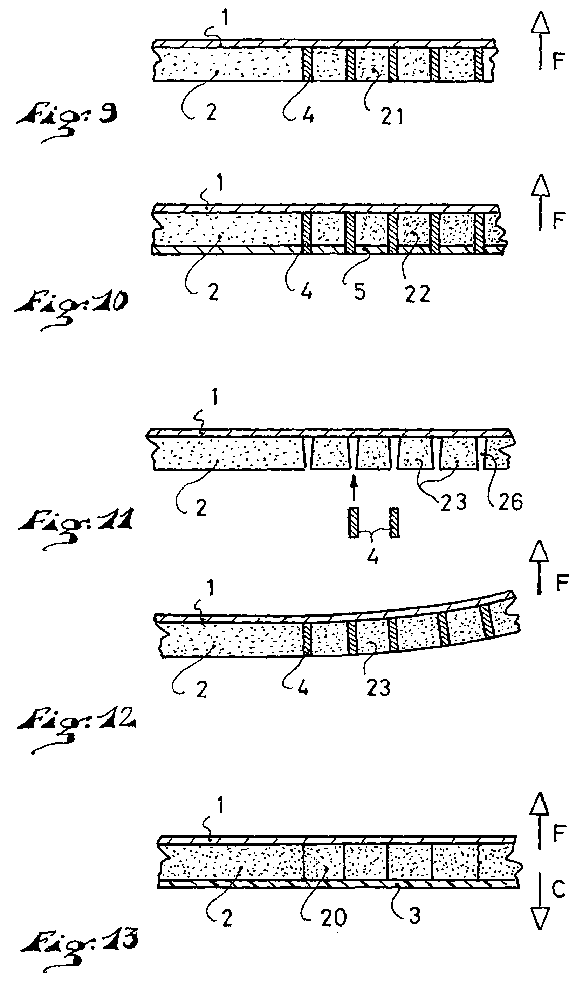

Dans le deuxième mode de réalisation représenté aux figures 5 à 8, on prévoit de disposer les blocs 20 de telle façon que deux groupes de lignes de flexion 61, 62, perpendiculaires entre eux, soient définis. On peut ainsi bénéficier d'une flexibilité dans deux directions (cf. figures 6, 7). Dans le cas de petites déformations, la structure pourra fléchir dans les deux directions simultanément (figure 8). Dans ce mode de réalisation, les lignes de flexion 61, 62, sont droites et perpendiculaires entre elles. Cependant pour certaines applications il sera plus intéressant de donner à ces lignes de flexion des Contours particuliers et de faire varier l'angle que font entre eux, les deux groupes de lignes de flexion, ledit angle pouvant prendre toute valeur comprise entre 100 et 90°, notamment 45°. Ces aspects seront décrit plus loin dans la description, notamment en relation avec l'utilisation de la structure selon l'invention dans la construction d'une tige de chaussure de sport ou d'une fixation de chaussure sur un engin de glisse.

La figure 9 décrit un troisième mode de réalisation dans lequel pour améliorer les performances, les éléments de la deuxième couche 2 sont constitués de barrettes 21 faites d'un matériau léger tel que décrit en référence aux figures 1 et 2 entre lesquelles on dispose des cales 4 de matière très rigide. La résistance à la compression de la deuxième couche 2 est ainsi améliorée sans pour autant alourdir considérablement la structure.

Dans un quatrième mode de réalisation de l'invention (cf. fig. 10), pour améliorer le comportement mécanique général de la structure, les éléments constituants la deuxième couche 2 sont des éléments multicouches 22. Pour ce faire, on donne à la deuxième couche une peau 5 très résistante. Cette peau peut consister en une lame similaire à la première couche 1 qui est collée à la deuxième couche et est ensuite découpée. Une telle structure, représentée à la figure 10, a en contre-flexion et en torsion la rigidité d'une structure sandwich haute performance, tout en gardant la possibilité de flexion vers le haut (direction F).

Dans un cinquième mode de réalisation de l'invention, une partie des éléments de la deuxième couche 2 sont reliés entre eux simplement parce qu'ils constituent des parties 24 faisant saillie d'une même pièce 25. La figure 22 représente partiellement une structure selon ce mode de réalisation. Une partie des éléments constituant la deuxième couche 2 forment une structure en créneaux 24 qui sera complétée par des cales 4 telles quelles sont décrites en référence à la figure 9. Une telle construction permet une fabrication en série de la structure selon l'invention. Il suffit en effet de coller un noyau monobloc 25 fait d'un matériau résistant à la compression sur une lame 1 faite d'un matériau à haut module d'élasticité. On vient ensuite usiner des rainures parallèles 26 dans ce noyau 25 afin de définir des éléments distincts 24 et on comble lesdites rainures avec des cales 4.

De manière avantageuse la structure selon l'invention possède des moyens d'énergisation qui augmentent la force de rappel en position neutre.

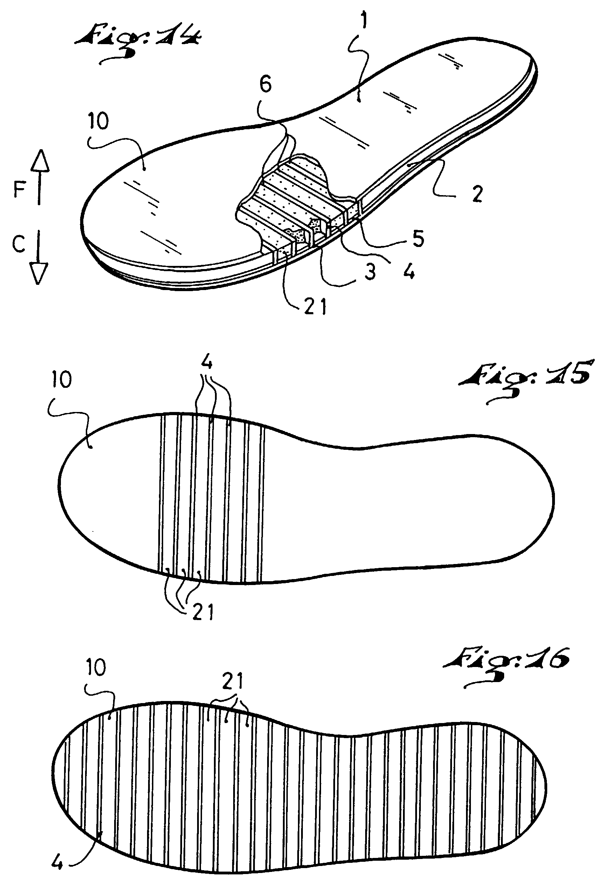

Une première méthode d'énergisation de la structure, mise en évidence dans les figures 11 et 12, consiste à précontraindre la première couche, ce faisant on donne à la structure un galbe. Pour ce faire, on sépare en deux phases le processus d'assemblage des éléments constituant la deuxième couche. Après avoir fixé sous la première couche 1 des blocs 23 en laissant un intervalle 26 entre deux blocs consécutifs, ce qui constitue la première phase de l'assemblage, on vient lors d'une deuxième phase d'assemblage, insérer dans cet intervalle 26 une cale 4 de largeur plus importante que ledit intervalle qui tend à écarter deux blocs consécutifs 23 l'un de l'autre (cf. figure 11). De préférence, entre les deux phases on fléchit la première couche pour faciliter l'insertion des cales 4. On obtient ainsi une structure qui en position neutre est galbée, ce qui a pour conséquence de précontraindre la première couche 1 dans la direction de flexion F (cf. figure 12). Il s'agit là bien évidemment d'un exemple non limitatif de mise en précontrainte de la première couche. On pourra cependant choisir toute autre méthode de mise en précontrainte de la première couche, y compris des méthodes dans lesquelles la deuxième couche est mise en précontrainte préalablement à son assemblage avec la première, ou encore des méthodes impliquant des variations de température lors des différentes phases d'assemblage.

La possibilité d'avoir une structure souple/rigide qui possède au repos, une position stable non plane est l'un des avantages de l'invention par rapport à l'état de la technique. Cet aspect de l'invention est particulièrement intéressant lorsqu'il s'agit de construire des éléments galbés notamment pour des tiges ou semelles de chaussure tels que chaussure de ski, de snowboard, de patin à roulette.

Une autre manière d'énergiser la structure est décrite en référence à la figure 13. Elle consiste en l'application sous la deuxième couche 2 d'une troisième couche 3, celle-ci étant faite d'un matériau très élastique. De préférence, cette troisième couche 3 est fixée à la deuxième couche par collage. Dans ce cas, la troisième couche 3 exerce une force de rappel dans la direction de contre-flexion C. Dans le cas où la première couche 1 est une lame métallique ou composite, il s'agit d'une énergisation qui complétera la force de rappel créée lors de la flexion de la lame selon la direction F. Dans le cas où la première couche 1 est en un matériau non élastique, cette énergisation est nécessaire pour ramener la structure en position neutre.

Pour augmenter encore l'énergisation, on collera cette troisième couche sous tension, c'est-à-dire déjà étirée. L' intérêt d' une telle énergisation est de garantir un retour à une position neutre même après de multiples flexions et donc de remédier aux problèmes de déformation permanente liée à la fatigue.

Bien entendu, chacune de ces 2 manières d'énergisation de la structure peut s'appliquer aux différents modes de réalisation de l'invention précédemment décrits.

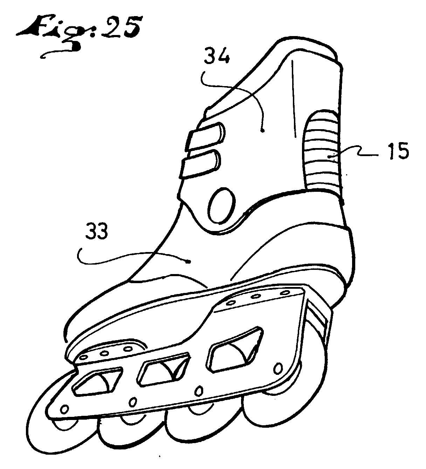

On a décrit jusqu'à présent des structures ayant des lignes de flexion 6 droites et parallèles entre elles. Cependant afin d'obtenir des performances et des comportements variables, on pourra donner à ces lignes 6 des profils variables. La figure 23 montre schématiquement une structure selon l'invention dans laquelle les lignes de flexion 6 ont des profils variés. De même, les cales 4 utilisées dans certains modes de réalisation peuvent avoir des sections variées (figure 24). La direction de ces lignes 6 de flexion pourra être aussi bien transversale que longitudinale à la structure sans sortir pour autant du cadre de la présente invention. Les figures 14-18 représentent des semelles de chaussure 10 utilisant la structure composite de l'invention. Dans le mode de réalisation de la figure 14, la première couche 1 constitue la partie supérieure de la semelle 10, la seconde couche 2 est constituée d'une pluralité de barrettes 21 définissant des lignes de flexion 6 et recouvertes sur leur face inférieure d'une peau rigide 5 faite du même matériau que la première couche. Entre deux barrettes 21 consécutives est disposée une cale 4. Enfin, une troisième couche d'un matériau élastique 3, collée sur la face inférieure de la couche 2, énergise la structure. Une telle semelle 10 pourra donc fléchir selon les lignes de flexion 6 dans la direction F, par exemple lors de la marche pour permettre le déroulement du pied. En revanche toute contre-flexion C sera impossible et permettra donc une application particulièrement intéressante notamment aux chaussures de football. Dans un tel cas les lignes de flexion 6 sont bien entendu disposées sensiblement transversalement à la direction longitudinale de la semelle. Elles peuvent être disposées avec une inclinaison correspondant à celle de l'articulation métatarsophalangienne. Une telle structure de semelle peut être utilisée comme première de montage ou comme semelle intermédiaire dans une semelle externe, celle-ci étant alors complétée par une semelle caoutchouc ou similaire. De façon connue, on complétera cette semelle d'une première de montage sur le dessus et d'une semelle caoutchouc pour le contact avec le sol.

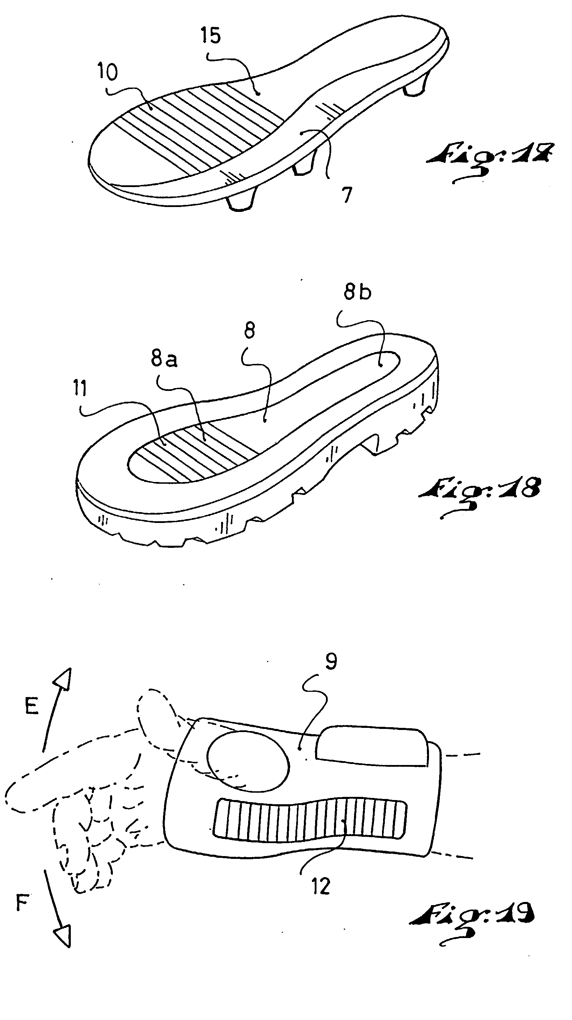

Dans les quatre modes de réalisation préférés qui suivent (fig. 15-18), la structure ne constitue qu'un insert qui est noyé dans la semelle de la chaussure. Dans un premier mode de réalisation (figure 16), la structure selon l'invention occupera toute la superficie de la semelle, assurant ainsi une flexibilité sous l'ensemble du pied. Dans un mode préféré (figures 14, 15), la structure occupe également toute la superficie de la semelle mais on ne dispose des barrettes 21 et des cales 4 que dans la zone d'articulation métatarsophalangienne. La flexibilité de la chaussure sera donc limitée à cette zone tandis que la rigidité en contre-flexion sera assurée sur toute la semelle.

La figure 17 montre la semelle 15 d'une chaussure de sport dans laquelle on place un insert 10 de la structure souple/rigide selon l'invention. Il s'agit d'un insert similaire à celui décrit figure 14 à la différence qu'il n'occupe pas en largeur la totalité de la semelle mais seulement la partie extérieure ou latérale de celle-ci. On obtient ainsi une semelle très rigide en contreflexion, capable de fléchir pour suivre le déroulement naturel du pied. Dans la partie médiale, une zone 7 relativement plus souple que l'insert permettra une meilleure prise d'appui lors des phases d'accélération. Une telle semelle sera particulièrement adaptée à la pratique du football.

La figure 18 montre également une semelle de chaussure de sport dans laquelle l'insert 11 selon l'invention est placé centralement. De part sa rigidité dans la zone 8 joignant la zone d'articulation métatarsophalangienne 8a à la zone talon 8b, cet insert rigidifie également la semelle en torsion, ceci sera particulièrement vrai si on choisi un insert tel que décrit en référence à la figure 10.

La structure selon l'invention se révèle également particulièrement intéressante pour la fabrication des protections corporelles. La figure 19 représente une protection de poignet notamment pour la pratique du skateboard, du snowboard ou du patin à roulettes, incorporant sur sa face inférieure, un insert 12 selon l'invention. Afin de protéger l'articulation du poignet on dispose de préférence cet insert 12 sur le côté intérieur de celui-ci dans une zone, qui partant de l'extrémité de l'avant bras se prolonge jusque dans la paume de la main. Pour répondre à des pratiques sportives et des besoins différents deux types de protection de poignet ont été envisagés. Dans le premier type, l'insert 12 laisse libre la flexion F du poignet 9 mais empêche son hyper-extension E, ce qui est une cause majeure d'accident dans ces pratiques sportives. Dans le deuxième type, l'insert est 'retourné' par rapport au premier type, c'est-à-dire qu'il autorise l'extension E mais interdit la flexion F. Dans ce dernier cas, afin d'empêcher un accident d'hyper-extension du poignet, on pourra donner une très grande élasticité à l'insert en l'énergisant tel que cela a été précédemment décrit. De préférence, les inserts disposé dans ces deux types de protection présenteront en position neutre un galbe, assurant ainsi un meilleur confort.

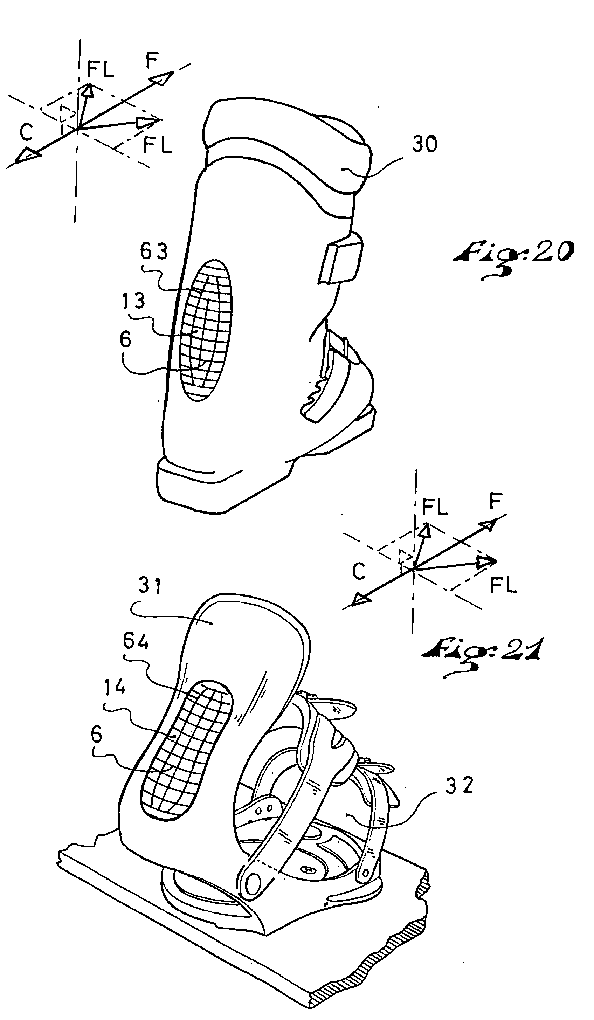

La figure 20 représente une chaussure de ski alpin 30 qui est équipée à l'arrière d'un insert 13 selon l'invention. Dans ce cas, les lignes de flexion principales 6 de l'insert 13 sont horizontales pour permettre la flexion F vers l'avant de la jambe. Des lignes de flexion complémentaires 63 sont disposées sensiblement verticalement pour permettre une flexion latérale FL limitée. On remarquera que les lignes de flexion complémentaires 63 sont incurvées afin de réduire, aux extrémités supérieures et inférieures de l'insert 13, l'angle que celles-ci font avec les lignes de flexion principales 6, qui elles sont sensiblement horizontales. L'utilisation d'un tel insert dans une chaussure de ski alpin permet de garantir une rigidité complète dans la direction de contre-flexion C et donc de garantir un bon appui arrière tout en permettant la flexion vers l'avant. Dans une moindre mesure et de façon complémentaire la flexion latérale FL se révèle particulièrement intéressante pour des chaussures de ski alpin notamment celles dédiées aux nouvelles glisses parmi lesquelles on compte les ski très courts ou 'snowblade'. Une telle construction est compatible avec des constructions de chaussure de type dits, entrée avant, entrée arrière ou hybride. Bien entendu un tel insert peut être utilisé dans la tige de tout autre type de chaussure, ayant des zones où des flexions sont souhaitées dans une seule direction.

Ce qui vient d'être décrit pour une chaussure de ski alpin se transpose évidemment à toute chaussure utilisé dans les sports de glisse. Par exemple, dans le cas d'un patin à roulette 33, on intégrera l'insert 15 selon l'invention dans le collier de serrage 34 de la cheville afin de bloquer la flexion arrière de l'articulation de la cheville.

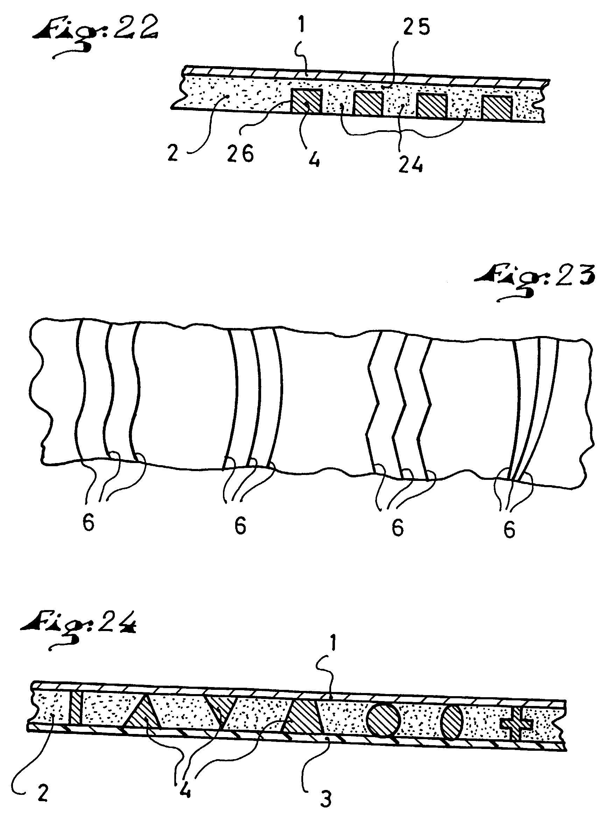

La figure 21 représente une fixation de snowboard 32 dont l'appui arrière 31, ou spoiler, est équipé d'un insert 14 selon l'invention. Comme dans le cas d'une chaussure de ski, la flexion F est autorisée vers l'avant grâce aux lignes de flexion principales 6, mais elle est interdite vers l'arrière. Le cas échéant on pourra prévoir des lignes de flexion complémentaires 64 qui permettront une flexion latérale FL limitée.

Bien entendu les différents modes de réalisation détaillés ci-dessus ne le sont qu'à titre d'exemple et toute combinaison des différentes caractéristiques entre elles est envisageable et couverte par la présente invention. Ainsi une structure décrite aux figures 5 à 8 pourra avantageusement être énergisée par l'aspect d'une troisième couche de matière élastique telle que décrite à la figure 13.

La présente invention s'applique notamment à toute structure pour laquelle on souhaite une flexibilité dans une certaine direction, mais une raideur dans la direction opposée.

## Revendications

1. Structure composite comprenant au moins une surface, ladite structure autorisant la flexion selon un côté de ladite surface et interdisant la flexion selon le côté opposé ou contre-flexion; structure caractérisée en ce qu'elle comprend:
- une première couche (1) flexible mais sensiblement non extensible,
- une deuxième couche (2) fixée sur la première comprenant une pluralité d'éléments (20) juxtaposés résistants au moins à des efforts de compression exercés suivant une direction sensiblement parallèle à la dite structure.

2. Structure composite selon la revendication 1, caractérisée en ce qu'elle comprend des moyens d'énergisation augmentant la force de rappel en position neutre.

3. Structure composite selon l'une des revendications 1 à 2, caractérisée en ce que la première couche (1) est faite d'un matériau ayant un haut module d'élasticité, notamment compris entre 10.000 et 100.000 MPa.

4. Structure composite selon l'une des revendications 1 à 3, caractérisée en ce que la première couche (1) est beaucoup plus fine que la deuxième (2).

5. Structure composite selon l'une des revendications 2 à 4, caractérisée en ce que les moyens d'énergisation sont constitués par une troisième couche (3).

6. Structure composite selon la revendication 5, caractérisée en ce que la troisième couche (3) est constituée d'un matériau élastique.

7. Structure composite selon l'une des revendications 5 à 6, caractérisée en ce que la troisième couche (3) est constituée de caoutchouc.

8. Structure composite selon l'une des revendications 1 à 7, caractérisée en ce que la pluralité d'éléments (20) est arrangée sous la forme d'une juxtaposition définissant au moins des lignes de flexion (6).

9. Structure composite selon l'une des revendications 1 à 8, caractérisée en ce que la pluralité d'éléments (20) comprend des éléments de forme sensiblement allongée, appelés blocs allongés (21, 22, 23, 24, 4).

10. Structure composite selon l'une des revendications 1 à 9, caractérisée en ce que la pluralité d'éléments (20) comprend des éléments reliés entre eux.

11. Structure composite selon la revendication 10, caractérisée en ce lesdits éléments reliés entre eux le sont par leur côté adjacent à la première couche (1).

12. Structure composite selon l'une des revendications 10 à 11, caractérisée en ce que lesdits éléments reliés entre eux constituent des parties (24) faisant saillie d'une même pièce (25).

13. Structure composite selon l'une des revendications 1 à 12, caractérisée en ce que la pluralité d'éléments (20) comprend des éléments de formes et de matériaux différents.

14. Structure composite selon l'une des revendications 1 à 13, caractérisée en ce que la pluralité d'éléments comprend deux types d'éléments, appelées barrettes (21, 22, 23, 24) et cales (4).

15. Structure composite selon l'une des revendications 1 à 14, caractérisée en ce que la pluralité d'éléments comprend des éléments multicouches (22).

16. Structure composite selon la revendications 15 caractérisée en ce que lesdits éléments multicouches (22) comprennent une peau (5) disposée sur la face extérieure desdits éléments.

17. Structure composite selon la revendication 16, caractérisée en ce que ladite peau (5) est constituée du même matériau que la première couche (1).

18. Structure composite selon l'une des revendications 1 à 17, caractérisée en ce que les lignes de flexion (6) sont toutes sensiblement parallèles.

19. Structure composite selon l'une des revendications 1 à 18, caractérisée en ce que les lignes de flexion (6) se regroupent en plusieurs groupes (61, 62), au sein desquels les lignes sont sensiblement parallèles entre elles.

20. Structure composite selon la revendication 19, caractérisée en ce que les groupes de lignes de flexion font entre eux un angle aigu.

21. Structure composite selon l'une des revendications 18 ou 19, caractérisée en ce que les lignes de flexion se regroupent en deux groupes (61,62) faisant entre eux un angle sensiblement perpendiculaire.

22. Structure composite selon l'une des revendications 18 ou 19, caractérisée en ce que les lignes de flexion se regroupent en deux groupes faisant entre eux un angle d'une valeur sensiblement égale à 45 degré.

23. Structure composite selon l'une des revendications 1 à 22, caractérisée en ce que lorsque la structure est en position neutre, la première couche (1) est maintenue, en précontrainte.

24. Structure composite selon l'une des revendications 1 à 23, caractérisée en ce que la structure est galbée.

25. Structure composite selon l'une des revendications 1 à 24, caractérisée en ce que le galbe est obtenu par un montage qui comprend deux phases distinctes d'assemblage de deux groupes d'éléments (21, 4) sur la première couche et en ce qu'entre les deux phases d'assemblage, une flexion de la plaque est opérée.

26. Structure composite selon l'une des revendications 1 à 25, caractérisée en ce qu'elle a la forme d'une semelle de chaussure et que les lignes de flexion (6) sont sensiblement perpendiculaires à l'axe longitudinal de la semelle.

27. Structure composite selon la revendication 26, caractérisée en ce que les lignes de flexion ne sont présentes que dans la zone correspondant à la zone d'articulation métatarsophalangienne.

28. Semelle de chaussure caractérisée en ce que elle comprend au moins une structure selon l'une des revendications 1 à 27.

29. Semelle de chaussure caractérisée en ce qu'une structure composite selon l'une des revendications 1 à 27 est insérée dans la semelle.

30. Semelle selon l'une des revendications 28 à 29, caractérisée en ce que la structure a une superficie sensiblement égale à celle de la semelle.

31. Semelle selon l'une des revendications 28 à 29, caractérisée en ce que la structure (11, 15) a un contour de forme similaire, mais de dimension moindre.

32. Tige de Chaussure caractérisée en ce qu'elle comprend au moins un insert (13) fait de la structure selon l'une des revendications 1 à 27.

33. Tige de Chaussure selon la revendication 32, caractérisée en ce que ledit insert (13) est positionné pour bloquer la flexion arrière de l'articulation de la cheville.

34. Tige de Chaussure selon l'une des revendications 32 à 33, caractérisée en ce que ledit insert (13) se trouve derrière à l'arrière de la chaussure au niveau de l'articulation de la cheville.

35. Patin à roulettes caractérisé en ce qu'il utilise un insert fait de la structure selon l'une des revendications 1 à 27.

36. Patin à roulettes selon la revendication 35, caractérisé ledit insert est positionné pour bloquer la flexion arrière de l'articulation de la cheville.

37. Patin à roulettes selon l'une des revendications 35 à 36, caractérisé ledit insert est fixé au collier de serrage de la cheville.

38. Dispositif de fixation d'une chaussure de sport sur un engin de glisse caractérisé en ce qu'il comprend un insert (14) fait de la structure selon l'une des revendications 1 à 27.

39. Dispositif de fixation d'une chaussure de sport sur un engin de glisse selon la revendication 38, caractérisé en ce que ledit insert (14) est positionné pour bloquer la flexion arrière de l'articulation de la cheville.

40. Dispositif de fixation d'une chaussure de sport sur un engin de glisse selon l'une des revendications 38 à 39, caractérisé en ce que ledit insert (14) est fixé dans le spoiler arrière (31).

41. Dispositif de protection corporelle (9) caractérisé en ce qu'il comprend un insert (12) fait de la structure selon l'une des revendications 1 à 27.

42. Dispositif de protection corporelle (9) selon la revendication 41, caractérisé en ce que l'insert (12) est utilisé pour la protection de l'articulation du poignet.

43. Dispositif de protection corporelle (9) selon la revendication 41, caractérisé en ce que l'insert (12) autorise la flexion du poignet et interdit l'extension de celui-ci.

44. Dispositif de protection corporelle (9) selon la revendication 41, caractérisé en ce que l'insert (12) autorise l'extension du poignet et interdit la flexion de celui-ci.
